# EUROPÄISCHE PATENTSCHRIFT

(11) **EP 3 366 434 B1**
(45) Veröffentlichungstag und Bekanntmachung des Hinweises auf die Patenterteilung: **18.05.2022**
(21) Anmeldenummer: 18158510.0
(22) Anmeldetag: 26.02.2018
(51) Int. Cl.: B25J 15/00, B25J 19/02, B25J 13/08, B25J 9/16, G01M 17/007, G01M 99/00, G06F 3/01

(54) **VERFAHREN ZUR ÜBERPRÜFUNG EINER FUNKTION EINES FAHRZEUGES UND/ODER ZUMINDEST EINER BEDIENEINRICHTUNG**
METHOD FOR CHECKING A FUNCTION OF A VEHICLE AND/OR AT LEAST ONE OPERATING DEVICE
PROCÉDÉ DE VÉRIFICATION D'UNE FONCTION D'UN VÉHICULE ET/OU D'AU MOINS UN DISPOSITIF DE COMMANDE

(30) Priorität: 28.02.2017 DE 102017104092
(43) Veröffentlichungstag der Anmeldung: 29.08.2018
(73) Patentinhaber: Battenberg, Günther, 35037 Marburg (DE)
(72) Erfinder: Battenberg, Günther, 35037 Marburg (DE)
(74) Vertreter: Stoffregen, Hans-Herbert

(56) Entgegenhaltungen:
- EP-A1- 3 070 645
- DE-U1-202014 100 803
- US-B2- 8 571 713
- BUTTERFASS J ET AL: "DLR's multisensory articulated hand. I. Hard- and software architecture", PROCEEDINGS / 1998 IEEE INTERNATIONAL CONFERENCE ON ROBOTICS AND AUTOMATION, MAY 16 - 20, 1998, KATHOLIEKE UNIVERSITEIT LEUVEN, LEUVEN, BELGIUM, IEEE, NEW YORK, NY, USA, Bd. 3, 16. Mai 1998 (1998-05-16), Seiten 2081-2086, XP010281534, DOI: 10.1109/ROBOT.1998.680625 ISBN: 978-0-7803-4300-9

## Beschreibung

Die Erfindung bezieht sich auf ein Verfahren zum Überprüfen einer Funktion eines eine Steuereinrichtung aufweisenden Fahrzeuges und/oder zumindest einer Bedieneinrichtung eines Fahrzeuges.

Insbesondere nimmt die Erfindung Bezug auf ein Verfahren zur Überprüfung einer Funktion, wie Rückholung eines eine Steuereinrichtung, wie Lenkrad, aufweisenden Fahrzeuges und/oder zumindest einer Bedieneinrichtung eines Fahrzeuges.

Gegenstand der Erfindung ist insbesondere ein Verfahren zum Überprüfen der Rückholfunktion eines eine Steuereinrichtung, wie Lenkrad, aufweisenden Fahrzeugs von einem automatischen Fahren zu einem von einer Person beeinflussten Fahren.

Ein autonomes oder selbstfahrendes Fahrzeug kann ohne menschliche Personen fahren, steuern, einparken. Befindet sich in einem entsprechenden Fahrzeug eine Person, so muss die Möglichkeit gegeben sein, dass ein Rückholen des Fahrzeuges in ein von der Person gesteuertes Fahren erfolgt, also das autonome Fahren unterbunden wird. Die Rückholung des Fahrzeuges durch den Fahrer muss mit dynamischen Mensch-Maschinen-Interaktionen durchgeführt werden können. Dabei muss innerhalb einer gewissen Reaktionszeit die volle Verantwortung über die Fahraufgaben übernommen werden. Hierbei ist die Konstellation Hände / Lenkrad in den bestimmten Fahrmodi wesentlich. Es muss sicher festgestellt werden, ob sich die Hände am Lenkrad befinden oder nicht. Um diesen Zustand genau bestimmen zu können, werden entsprechende Lenkräder mit kapazitiven Sensoren ausgerüstet, die einzeln oder segmentweise angeordnet sind. Eine sichere Betriebsfunktion der Sensoren bei der Handannäherung mit Abstand X und der Hüllkurve des Lenkrades ist daher exakt zu bestimmten. Dabei ist Grad der Annäherung, Art der Annäherung, wie mit einem Finger, zwei Fingern, exakt zu bestimmen, wobei auch die Annäherungsgeschwindigkeit zu berücksichtigen ist. Insoweit besteht ein Bedürfnis, exakte Aussagen reproduzierbar zu erhalten.

Auch die in einem Fahrzeug vorhandenen Einrichtungen für Infotainment, Touchdisplay, über das Funktionen ausgelöst werden, oder das Einwirken auf virtuelle Bedienelemente, die in Form von Hologrammen dargestellt sein können, müssen eine hohe Funktionstüchtigkeit aufweisen, wobei deren Überprüfung zu reproduzierbaren Aussagen führen müssen.

Der EP 3 070 645 A1 bezieht sich auf eine Vorrichtung und ein Verfahren zum Testen einer Gestenerkennungseinrichtung. Hierzu wird eine Roboterhand benutzt, die im Überwachungsbereich der Gestenerkennung verstellt wird.

In der US 8 571 731 B2 wird ein Roboter beschrieben, dessen bewegliche Finger aufweisende Hände Drucksensoren aufweisen, um die Hände als Keyboard verwenden zu können.

Der Literaturstelle, Butterfass/Hirzinger/Knoch, Liu, "DLR's Multisensory Articulated Hand", ist eine Roboterhand mit vier identischen Fingern zu entnehmen, von denen einer die Funktion eines Daumens ausübt. Um eine hohe Funktionstüchtigkeit zu erzielen, weist die Hand zwölf Freiheitsgrade zum Bewegen auf.

Gegenstand der DE 20 2014 100 803 U1 ist eine Messeinrichtung für ein Lenkrad in einem Kraftfahrzeug. Die Messeinrichtung weist einen taktilen Industrieroboter mit einem Endeffektor zur festen Aufnahme des Lenkrads in einer definierten Lage auf.

Der vorliegenden Erfindung liegt die Aufgabe zugrunde, ein Verfahren zur Überprüfung einer Funktion, wie Rückholung eines Fahrzeuges, und/oder einer Bedieneinrichtung eines Fahrzeuges derart weiterzubilden, dass reproduzierbare Aussagen ermöglicht werden bzw. festgestellt werden kann, ob gewünschte Funktionen ordnungsgemäß ausgelöst werden.

Die Aufgabe wird durch ein Verfahren nach Anspruch 1 sowie eine Verwendung nach Anspruch 14 gelöst.

Zur Lösung der Aufgabe wird insbesondere vorgeschlagen ein Verfahren zum Überprüfen einer Funktion eines eine Steuereinrichtung aufweisenden Fahrzeuges und/oder zumindest einer Bedieneinrichtung eines Fahrzeuges mittels einer Hand eines Handhabungsgerätes, die bewegliche Finger, Handfläche und Handrücken aufweist und in der mehrere Sensoren zumindest aus der Gruppe Abstandssensor, Drucksensor, Temperatursensor, Feuchtesensor, Inertialsensor, Ultraschallsensor, optischer Sensor integriert sind, wobei die Funktion berührungslos durch Annähern der Hand an die reale oder virtuell ausgebildete Steuereinrichtung und/oder Bedieneinrichtung überprüft wird.

Insbesondere sieht die Erfindung vor ein Verfahren zum Überprüfen der Rückholfunktion eines eine Steuereinrichtung, wie Lenkrad, aufweisenden Fahrzeugs von einem automatischen Fahren zu einem von einer Person beeinflussten Fahren mittels einer Hand eines Handhabungsgerätes, die fünf bewegliche Finger, Handfläche und Handrücken aufweist und in der mehrere Sensoren zumindest aus der Gruppe Abstandssensor, Drucksensor, Temperatursensor, Feuchtesensor, Inertialsensor, Ultraschallsensor, optischer Sensor integriert sind, wobei zunächst die Steuereinrichtung mittels der Hand gescannt und sodann eine die Steuereinrichtung umgebende Umhüllende gebildet wird, der Abstand zwischen der Hand und der Steuereinrichtung durch eine in der Hand integrierte erste Gruppe von Sensoren ermittelt wird und dann, wenn die Hand die Umhüllende durchdringt, in der Steuereinrichtung integrierte Sensoren dann die Rückholung auslösende Signale generieren, wenn die in der Steuereinrichtung integrierten Sensoren ordnungsgemäß arbeiten.

Zur Lösung der Aufgabe sieht die Erfindung auch vor ein Verfahren zum Überprüfen einer Funktion, wie Rückholung eines eine Steuereinrichtung, wie Lenkrad, aufweisenden Fahrzeugs und/oder zumindest einer Bedieneinrichtung eines Fahrzeugs mittels einer Hand eines Handhabungsgerätes, wobei als Hand eine solche verwendet wird, die fünf bewegliche Finger, Handfläche und Handrücken aufweist und in der Hand mehrere Sensoren zumindest aus der Gruppe Abstandssensor, Drucksensor, Temperatursensor, Feuchtesensor, Inertialsensor, Ultraschallsensor, optischer Sensor integriert werden. Dabei zeichnet sich die Erfindung insbesondere dadurch aus, dass zur Überprüfung der Funktion der Rückholung des Fahrzeuges von einem automatischen Fahren zu einem von einer Person beeinflussten Fahren zunächst die Steuereinrichtung, wie das Lenkrad, mittels der Hand gescannt und sodann eine die Steuereinrichtung umgebende Umhüllende gebildet wird, dass der Abstand zwischen der Hand und der Steuereinrichtung durch eine in der Hand integrierte erste Gruppe von Sensoren, insbesondere Abstandssensoren, ermittelt wird, und dass dann, wenn die Hand die Umhüllende durchdringt, in der Steuereinrichtung integrierte Sensoren dann die Rückholung auslösende Signale generieren, wenn die integrierten Sensoren ordnungsgemäß arbeiten.

Erfindungsgemäß besteht die Möglichkeit, die exakte Prüflage der nachstehend auch als Lenkrad bezeichneten Steuereinrichtung zu erfassen. Hierzu kann zunächst das Lenkrad mithilfe von in der Hand - auch Prüfhand genannt - integrierten Sensoren eingescannt werden, um sodann eine Umhüllende zu bestimmen, um bei Eindringen in diese ein Signal für das Rückholen des Fahrzeuges zu generieren.

Die Umhüllende wird folglich auf der Basis von Werten bestimmt, die mit in der Hand integrierten Abstandssensoren ermittelt werden, wobei Lage bzw. Position der in der Steuereinrichtung integrierten Sensoren, insbesondere kapazitive Sensoren, einbezogen sind.

Um die Koordinaten der Hand und die des Fahrzeuges und damit der Steuereinrichtung aufeinander abzustimmen, ist vorgesehen, dass die genaue 3D-Lage und 3D-Orientierung, d.h. die Position der Hand, mittels eines in der Hand integrierten Initialsensors, der vorzugsweise im Handrückenbereich integriert ist, ermittelt wird. Die entsprechenden Koordinaten werden sodann in die Koordinaten des Fahrzeuges transformiert.

Verfahrensmäßig geht man insbesondere derart vor, dass die Hand zunächst die kapazitiven Sensoren berührt und auf diese Weise die exakte Koordinatenbestimmung des Lenkrads vornimmt. Die diesbezüglichen realen Messpunkte und die mittels der Hand eingescannten Lenkraddaten werden sodann in Messrobotik-Trajektorien der Hand transformiert.

Die Hüllkurve kann visualisiert werden.

Insbesondere zeichnet sich die Erfindung auch dadurch aus, dass die Bewegung der Hand und/oder deren Finger über von einem oder mehreren Abstandssensoren gemessenen Abstand zu einer in dem Fahrzeug zu prüfenden und/oder eine Funktion auslösenden Einrichtung und/oder durch Signale einer mit dem optischen Sensor verbundenen Bildverarbeitung beeinflusst bzw. geregelt wird.

Insbesondere zeichnet sich die Erfindung dadurch aus, dass mittels dem in der Handfläche integrierten optischen Sensor, wie Kamera, in dem Fahrzeug vorhandene Einrichtung und/oder Darstellung, wie Hologramm, erfasst wird, dass die Hand zu der Einrichtung und/oder der Darstellung bewegt wird und sodann mittels der Hand Messungen an der Einrichtung und/oder der Darstellung durchgeführt oder Funktionen über die Einrichtung und/oder Darstellung ausgelöst werden. Die Bewegung zu der Einrichtung und/oder Darstellung kann auch programmgesteuert erfolgen, indem die Positionsdaten der Einrichtung und/oder Darstellung bekannt sind und diese der Steuerung der Hand zugeführt werden oder in dieser abgelegt sind, um sodann die Hand zu der Einrichtung und/oder Darstellung zu bewegen.

Durch diese Maßnahme ist die Möglichkeit gegeben, dass mittels der Hand selbständig Einrichtungen und/oder Darstellungen in dem Fahrzeug erfasst und geprüft werden können.

Ferner zeichnet sich die Erfindung dadurch aus, dass von der Hand, vorzugsweise über einen Infrarotstrahler, Wärme abgestrahlt wird, und dass mittels eines in der Hand integrierten Sensors Abstand zu einem in dem Fahrzeug integrierten Sensor in Abhängigkeit von durch die Wärme in dem in dem Fahrzeug integrierten Sensor ausgelöster Funktion ermittelt wird.

Somit können automatisch Überprüfungen von Funktionen erfolgen, die ihrerseits über in dem Fahrzeug vorhandene Sensoren ausgelöst werden.

Es besteht auch die Möglichkeit, Funktionen z. B. eines Touchscreens oder virtueller Bedienelemente, die z. B. durch Hologramme dargestellt werden, zu überprüfen. Insbesondere werden die in der Hand integrierten Infrarotstrahler verwendet, um berührungslose Gesten über eine Infotainment-Bedieneinheit auszulösen. So können z.B. über zumindest eine in der Infotainment-Bedieneinheit eingebaute Kamera die Infrarotstrahlen detektiert und als Bewegung z. B. eines Schiebereglers im Displayinhalt der Infotainment-Bedieneinheit angezeigt werden. Damit entsteht der Eindruck eines Hologramms. Zusätzlich kann die Infotainment-Bedieneinheit über Aussendung von Ultraschallwellen einen haptischen Eindruck in der Bedienhand erzeugen. Zum Nachweis der haptischen Rückkopplung wird ein in der Hand integrierter Ultraschallsensor verwendet.

Die Erfindung zeichnet sich daher auch dadurch aus, dass durch von der Hand ausgelöste Aktion einer Einrichtung, wie Touchscreen, und/oder einer Darstellung, wie Hologramm, von zumindest einem in der Hand integrierten Sensor, wie Druck-, Vibrationssensor oder optischen Sensor, ermittelt wird.

Insbesondere besteht die Möglichkeit, reproduzierbar eine Funktionalitäts- und Qualitätsprüfung einer eine Funktion auslösenden Fläche, wie Touchscreen, durchzuführen, um Qualitätsschwankungen von Funktionen auslösenden Einrichtungen, wie Displays, zu vermeiden.

Daher zeichnet sich die Erfindung auch dadurch aus, dass mittels eines oder mehrerer in der Hand integrierter Sensoren, insbesondere Drucksensor bzw. -sensoren, Funktion eines oder mehrerer Bedienelemente, wie Taste, Drehsteller von z. B. einer Infotainmenteinrichtung, gemessen wird bzw. werden.

Die Erfindung umfasst eine Prüfhand, die der menschlichen Hand nachempfunden wird. In der Prüfhand sind Sensoren integriert, so dass mittels der mit einem Roboter verbundenen Hand Funktionen für die Rückholung autonomen Fahrens oder Infotainment-Bedienelemente und Touchpanels getestet werden können.

Die Hand besteht aus fünf beweglichen Fingern mit integrierten Abstandssensoren in den vorderen und hinteren Fingerspitzen sowie in der Handinnen- und -außenfläche. In den Fingerspitzen befinden sich zudem Drucksensoren. In der Handfläche kann eine Kamera sowie ein Temperatur- bzw. Feuchtesensor vorgesehen sein. Die Oberfläche der Hand selbst besteht aus leitfähigem Material, das geerdet ist.

Aufgrund der erfindungsgemäßen Lehre sind eine Vielzahl von Anwendungen möglich. Das Prüfen eines autonomen Fahrassistenzsystems sollte im Fokus stehen. Dabei nähert sich die Hand in einem definierten Annäherungsbereich einer Steuerung, wie Lenkrad.

Es besteht die Möglichkeit, dass die Abstandssensoren die Bewegung der Finger individuell in Abhängigkeit von dem gemessenen Abstand regeln.

Es können verschiedene Greifgesten durchgeführt werden. So kann z. B. die komplette Faust ein Lenkrad greifen und z. B. anschließend der Zeigefinger den Blinker betätigen. Somit können intelligente Lenkräder geprüft werden, welche mittels kapazitiver Annäherungssensoren den Zustand des Fahrers erfassen.

Ein weiteres Anwendungsgebiet ist das Infotainment. Dabei werden klassische Bedienelemente wie Tasten, Drehsteller mit dem Finger der Prüfhand betätigt. Drucksensoren in den Fingerspitzen werden zur taktilen Wahrnehmung und zum Messen verwendet. Zudem können kapazitive Touchdisplays bedient werden. Die Anzeige des Touchdisplays wird über einen in der Handinnenfläche integrierten optischen Sensor, wie Kamera, erfasst. Somit kann die Funktion der Bedienelemente und des Touchdisplays geprüft werden.

Auch Luftgesten können umgesetzt werden, die ihrerseits Funktionen im Fahrzeug auslösen. Eine berührungslose Wischgeste vor einem kapazitiven Touchdisplay oder einem Infrarot-Näherungssensor kann z. B. die Klimaanlage oder das Fensterdach steuern. Die Prüfhand kann dies auslösen und die Abstände zum Display oder dem Dach mithilfe der integrierten Abstandssensoren erfassen. Damit lassen sich komplexe Bedienabläufe durch die Roboterhand nachstellen und realistisch prüfen.

Erwähntermaßen besteht auch die Möglichkeit, an einem Hologramm auszulösende Funktionen bzw. ein ordnungsgemäßes Reagieren zu überprüfen. Hierin ist ein weiteres selbstständigen Schutz genießendes Merkmal der Erfindung zu sehen. So kann ein in einem Kraftfahrzeug projiziertes Hologramm, das z.B. als Steuerzentrale für ein Bordsystem dient, z. B. mittels zumindest eines in der Prüfhand integrierten Sensors, wie Kamera, erkannt und die absolute Position im Raum gemessen werden. Somit kann sich die Hand dem Hologramm nähern, um sodann Gesten-Steuerungen auszuführen, die Funktionen auslösen sollen. Die Gesten werden mittels zumindest einer im Fahrzeug eingebauten Kamera erkannt. Wird die eine Funktion auslösende Geste erkannt und die entsprechende Funktion ausgelöst, werden zum Beispiel Ultraschallwellen im Fahrzeug ausgesandt, die von zumindest einem in der Hand integrierten Ultraschallsensor erkannt werden, so dass infolgedessen eine haptische Rückmeldung erfolgt. Die ordnungsgemäße Funktion entsprechender Hologramme kann somit überprüft werden. Anstelle des Erkennens des Hologramms mittels insbesondere eines optischen Sensors kann die Hand auch mittels Steuerung zu dem Hologramm geführt werden, wenn die Positionsdaten des Hologramms in der Steuerung gespeichert sind.

Es besteht aber auch die Möglichkeit, dass der Prüfroboter in einer Klimakammer betrieben wird, um Umgebungseinflüsse zu untersuchen. Hierzu ist vorgesehen, dass in der Hand ein Temperatur- und/oder Feuchtesensor integriert ist, dessen Messwerte überwacht werden.

Insbesondere zeichnet sich die Erfindung auch aus durch die Verwendung einer Hand eines Handhabungsgerätes mit einem dreigliedrigen kleinen Finger, einem dreigliedrigen Ringfinger, einem dreigliedrigen Mittelfinger, einem dreigliedrigen Zeigefinger, einem zweigliedrigen Daumen mit proximalem dritten Glied, Handfläche und Handrücken, wobei
- zumindest jeweils ein Abstandssensor in jedem Finger sowie zumindest ein Abstandssensor in dem Daumen integriert sind, und
- die Abstandssensoren bestimmt sind, Abstand zu einer Steuereinrichtung oder einer Bedieneinrichtung eines Fahrzeuges zum Überprüfen deren Funktion zu bestimmen.

Bevorzugterweise ist vorgesehen, dass in dem Finger sowohl innenseitig als auch außenseitig zumindest jeweils ein Abstandssensor, insbesondere im distalen Glied, integriert ist.

Auch besteht die Möglichkeit, dass in der Hand, insbesondere im Handrücken, ein Temperatur- und/oder Feuchtesensor integriert ist.

Weitere Einzelheiten, Vorteile und Merkmale der Erfindung ergeben sich nicht nur aus den Ansprüchen, den diesen zu entnehmenden Merkmalen - für sich und/oder in Kombination - , sondern auch aus der nachfolgenden Beschreibung von den Zeichnungen zu entnehmenden bevorzugten Ausführungsbeispielen.

Es zeigen:
- Fig. 1: eine Prinzipdarstellung einer Prüfhand eines Mehrachsroboters in Innenansicht,
- Fig. 2: die Prüfhand gemäß Fig. 1 in Rückansicht,
- Fig. 3: die Prüfhand gemäß Fig. 1 und 2 in Vorderansicht,
- Fig. 4: die Prüfhand gemäß der Fig. 1 bis 3 in Seitenansicht,
- Fig. 5: die Prüfhand in einem ersten Anwendungsfall,
- Fig. 6: die Prüfhand in einem zweiten Anwendungsfall und
- Fig. 7: die Prüfhand in einem dritten Anwendungsfall.

Im Betriebszustand des autonomen Fahrens eines Fahrzeuges muss dessen Rückholung durch einen Fahrer mit dynamischen Mensch-Maschinen-Interaktionen erfolgen. Dabei muss innerhalb einer vorgegebenen Reaktionszeit die Verantwortung über die Fahraufgabe von dem Fahrer wieder übernommen werden können. Ein wesentlicher Punkt dabei sind die Konstellationen Hände/Lenkrad in den bestimmten Fahrmodi. Es muss die Position der Hände erfasst werden können, ob diese sich am Lenkrad befinden oder zu diesem entfernt sind.

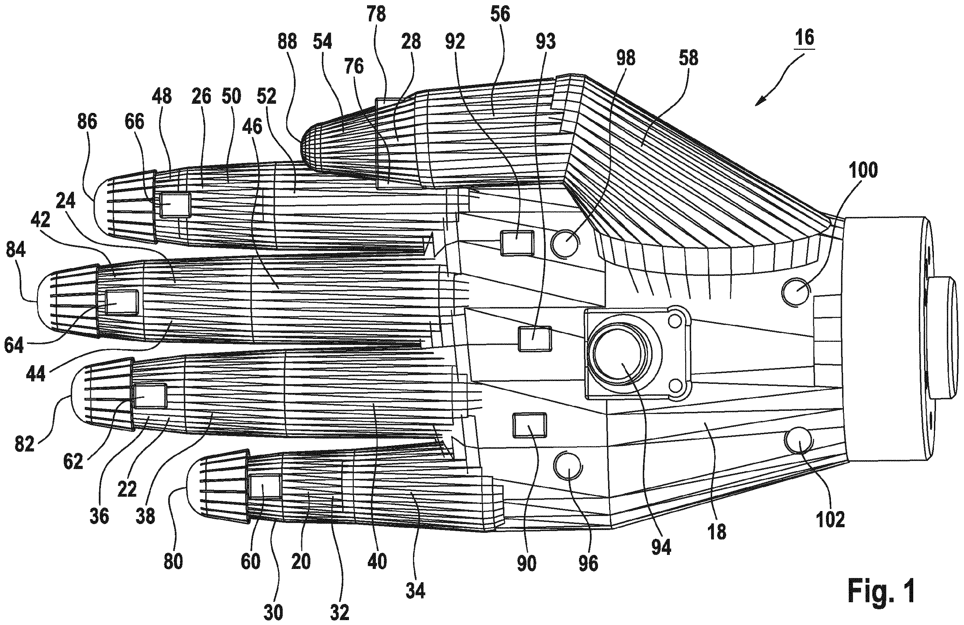

Um insoweit eine reproduzierbare Überprüfung vorzunehmen, ob die gewünschten Funktionen und Parameter erfüllt sind, ist erfindungsgemäß vorgesehen, dass ein Mehrachsroboter eingesetzt wird, dessen Arm 12 über einen Flansch 14 mit einer als Prüfhand zu bezeichnenden Hand 16 verbunden ist, die der menschlichen Hand nachempfunden ist. Dies ergibt sich aus den zeichnerischen Darstellungen. So ist die Prüfhand 16 in der Fig. 1 in Richtung der Handfläche 18 betrachtet dargestellt. Die Hand 16 weist - wie die menschliche Hand - fünf Finger auf, nämlich einen kleinen Finger 20, einen Ringfinger 22, einen Mittelfinger 24, einen Zeigefinger 26 sowie einen Daumen 28. Die Finger 20, 22, 24, 26 weisen jeweils drei gelenkig zueinander und zu der Handfläche 18 bewegliche Glieder 30, 32, 34, 36, 38, 40, 42, 44, 46, 48, 50, 52 auf. Auch der Daumen weist drei zueinander und zur Handfläche 18 bewegliche Glieder 54, 56, 58 auf, so dass infolgedessen die Bewegung einer menschlichen Hand nachgebildet werden kann.

Erfindungsgemäß ist vorgesehen, dass in der Hand 16 eine Vielzahl von Sensoren integriert sind, um gewünschte Überprüfungen vorzunehmen bzw. Funktionen überprüfen zu können; denn die erfindungsgemäße Lehre beschränkt sich nicht nur auf Messungen an einem Lenkrad, um die Funktionen für eine Rückführung von einem autonomen zu einem fahrergesteuerten Fahren zu ermitteln, sondern auch auf die Möglichkeit, Funktionen von Einrichtungen in dem Fahrzeug, wie Touchpanel, Infotainment, oder die Auslösung von Funktionen durch Interaktion mit in dem Fahrzeug angeordneten Sensoren oder erzeugten Hologrammen zu überprüfen.

Durch die Nachbildung der menschlichen Hand besteht auch die Möglichkeit, Greif- und Montageprozesse durchzuführen, wobei insbesondere ein Anlernen von einem Werker über Datenhandschuhe erfolgen kann. Die Möglichkeit einer Interaktion der Fünf-Finger-Hand 16 mit einer menschlichen Hand für Assistenzsysteme ist möglich. So kann ein Werker an die Hand 16 ein Werkstück übergeben und umgekehrt.

Fokus ist insbesondere jedoch, reproduzierbar zu überprüfen, ob die Rückholung eines Fahrzeuges vom autonomen Fahren zum fahrergesteuerten Fahren in Abhängigkeit von der Annäherung einer Hand an ein Lenkrad eines Kraftfahrzeuges sichergestellt ist, ohne dass hierdurch die erfindungsgemäße Lehre eingeschränkt werden soll.

Entsprechend der zeichnerischen Darstellungen sind in den distalen Gliedern 30, 36, 42, 48 der Finger 20, 22, 24, 26 sowohl auf der Vorder- als auch der Rückseite Abstandssensoren 60, 62, 64 ,66, 68, 70, 72, 74 integriert. Hierbei kann es sich um Time-of-Flight-Sensoren handeln. Auch der Daumen 28 weist entsprechende Abstandssensoren 76, 78 auf, wobei diese seitlich an dem distalen Glied 54 positioniert sein können. Andere Anordnungen sind gleichfalls möglich.

Ferner ist in den Kuppen der Finger 20, 22, 24, 26, 28 ein Drucksensor 80, 82, 84, 86, 88 integriert, die in der Fig. 1 dargestellt sind.

In der in Fig. 1 dargestellten Handfläche 18 finden sich des Weiteren Abstandssensoren 90, 92 und ein optischer Sensor 94 in Form einer Kamera. In der Handfläche 18 können des Weiteren Infrarotstrahler 96, 98, 100, 102 integriert sein.

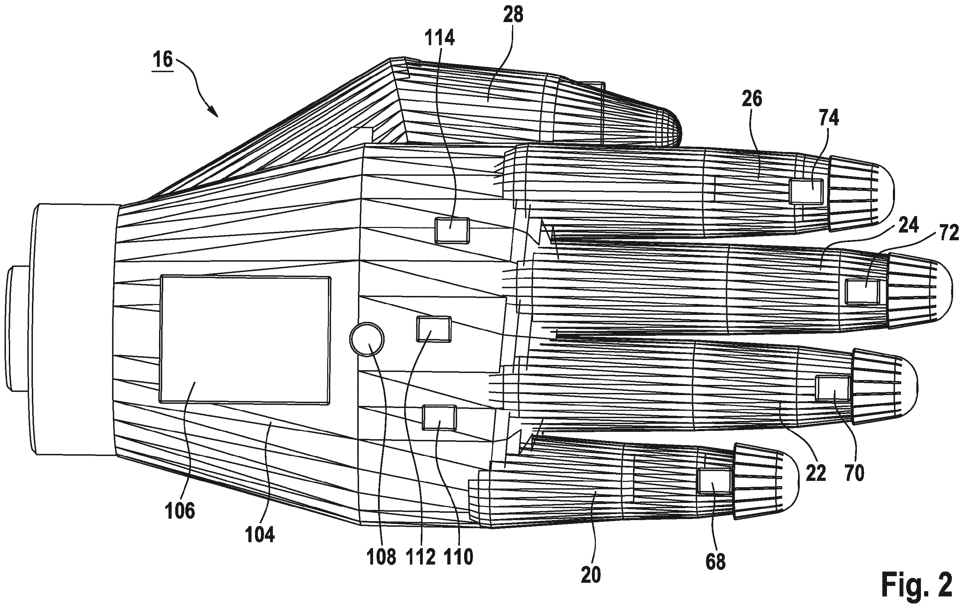

In Fig. 2 ist die Hand 16 von der Rückseite aus betrachtet dargestellt. In dem Handrücken 104 ist ein Inertialsensor 106 integriert. Ferner finden sich zwischen dem Inertialsensor und den Fingern 20, 22, 24, 26, 28 weitere Abstandssensoren 110, 112, 114.

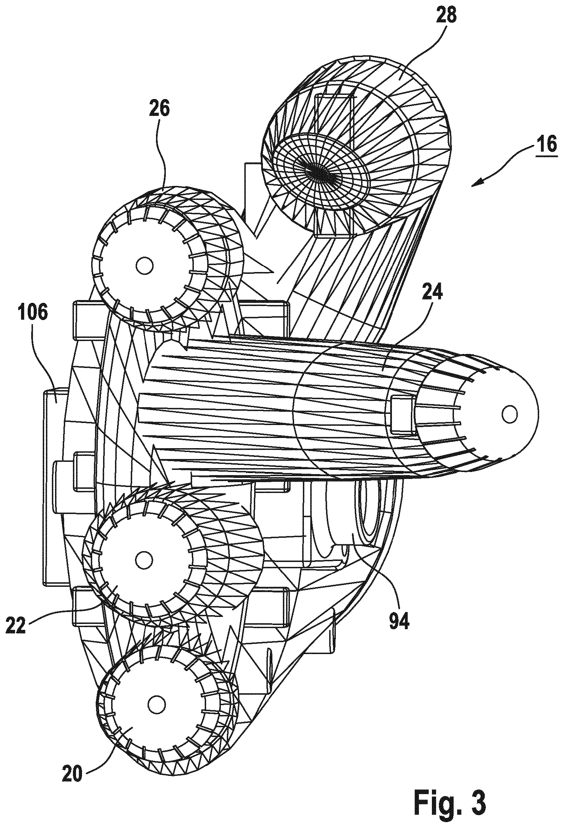

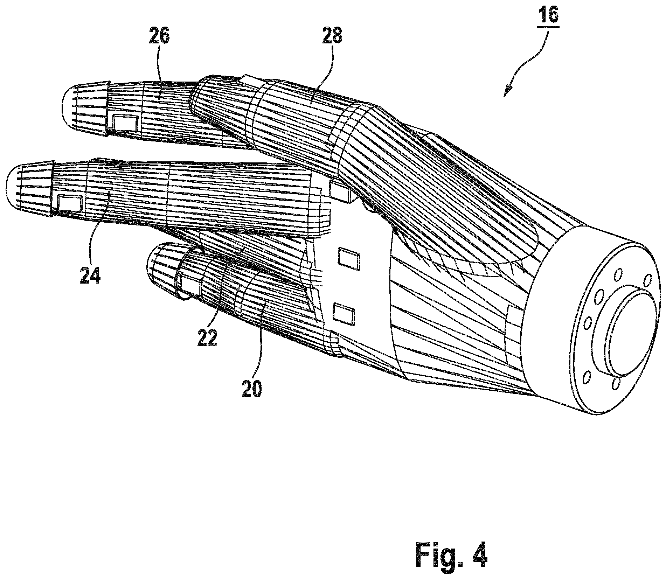

Die Fig. 3 zeigt die Hand 16 in Vorderansicht, wobei verdeutlicht wird, dass die Finger 20, 22, 24, 26, 28 zueinander und zu der Handfläche 18 entsprechend den Fingern einer menschlichen Hand bewegt bzw. verstellt werden können. Dies soll auch die Fig. 4 vermitteln, in der die Hand 16 von der Seite her dargestellt ist und die Finger zueinander Positionen einnehmen, die denen einer menschlichen Hand entsprechen können. Zur Übersichtlichkeit sind in den einzelnen Figuren nicht sämtliche Sensoren eingezeichnet bzw. gekennzeichnet.

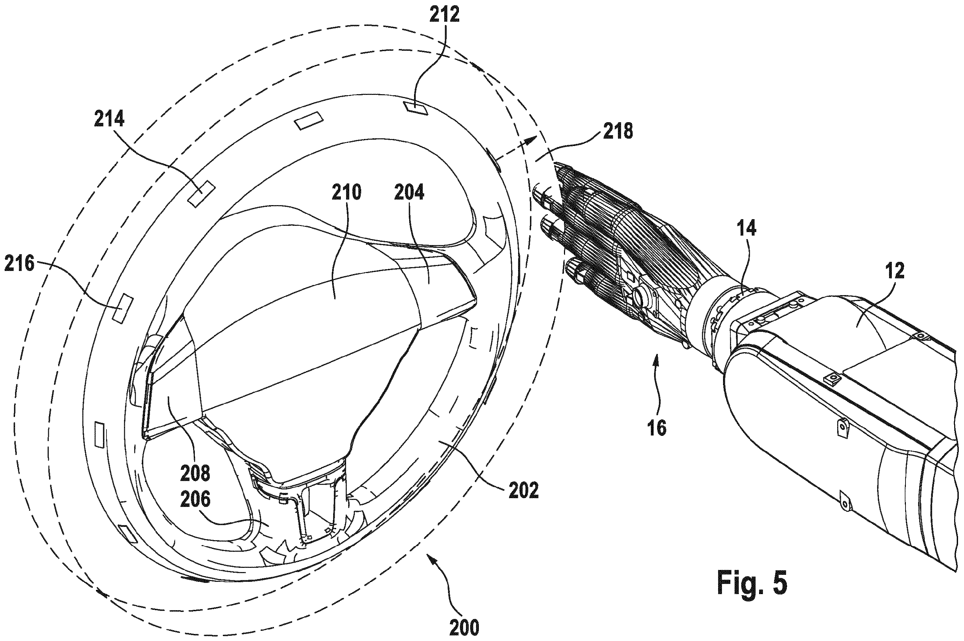

Anhand der Fig. 5 soll rein prinzipiell verdeutlicht werden, dass ein ordnungsgemäßes Erkennen eines Lenkrads und festgelegte Abstände reproduzierbar überprüft werden können, damit eine sichere Rückholung eines Fahrzeuges von einem autonomen zu einem fahrergesteuerten Fahren ermöglicht wird.

So ist ein Lenkrad 200 eines Fahrzeuges dargestellt, das entsprechend üblichen Aufbaus einen von einer Hand erfassbaren Ring 202 aufweist, das über Speichen 204, 206, 208 mit einem Mittelteil 210 verbunden ist. In dem Lenkrad 200 befinden sich kapazitive Sensoren, von denen einige mit den Bezugszeichen 212, 214, 216 gekennzeichnet sind. Sind in der zeichnerischen Darstellung die kapazitiven Sensoren 212, 214, 216 einzeln angeordnet, so kann auch eine segmentweise Ausbildung gegeben sein.

Um die sichere Betriebsfunktion der Sensoren, 212, 214, 216 bestimmen zu können, damit folglich der Übergang zwischen autonomem und fahrgesteuertem Betrieb sicher erfolgt, muss bei Annäherung einer Hand in einem Abstand X von den Sensoren eine Rückholung erfolgen. Dabei sind Grad der Annäherung - Einfinger-, Zweifinger-, ... - exakt zu bestimmen, wobei auch eine Abhängigkeit von der Annäherungsgeschwindigkeit erfasst werden soll.

Dabei ist es erforderlich, dass zunächst die Hüllkurve des Lenkrads 200, das heißt des Rings 202, ermittelt wird. Hierzu wird der Ring 202 von der Hand 16 eingescannt. Gleichzeitig werden in dem gescannten Ring 202 die Positionen der Sensoren 212, 214, 216 markiert. Die realen Messpositionen mit dem eingescannten Ring 202 und den Positionen der Sensoren 212, 214, 216 werden sodann in Messrobotik-Trajektorien der Hand 16 transformiert. Die Koordinaten des Roboters werden folglich in die des Fahrzeuges bzw. des Lenkrads 200 transformiert. Dies kann durch eine übliche Koordinatentransformation erfolgen. Fixpunkte oder CAD-Daten können gleichfalls benutzt werden.

Sodann wird eine Hüllkurve des Rings 202 festgelegt, die den Abstand zu den Sensoren 212, 214, 216 vorgibt, der überwunden werden muss, damit ein automatisches Umschalten von autonomem zu fahrgesteuertem Fahren des Fahrzeuges erfolgt. Anschließend wird die geforderte Funktion dadurch überprüft, dass sich die Hand 16 dem Lenkrad 200 bzw. dem Ring 202 nähert. Es wird folglich überprüft, ob in einem vordefinierten Abstand die Sensoren 212, 214, 216 die Hand 16 wahrnehmen, um damit eine sichere Rückholung eines Fahrzeuges erfolgen kann.

Die ermittelte Hüllkurve 218 kann visualisiert werden.

Zur Bestimmung der Hüllkurve 218 werden die Abstandssensoren 60, 62, 64, 66, 68, 70, 72, 74, 76, 78, 90, 92, 93, 110, 112, 114 benutzt. Um die Position der Hand 16 zu erfassen, ist der Inertialsensor 106 vorgesehen.

Aber nicht nur die Bestimmung einer Hüllkurve eines Lenkrades und deren Durchdringung kann aufgrund der erfindungsgemäßen Lehre reproduzierbar ermittelt werden, sondern auch weitere Funktionen in einem Fahrzeug. So besteht die Möglichkeit, Infotainment-Bedienelemente und Touchpanels zu testen. Die Hand 16 mit seinen beweglichen Fingern, 20, 22, 24, 26, 28 weist hierzu unter anderem die Drucksensoren 80, 82, 84, 86, 88 auf, um ein taktiles Wahrnehmen und Messen zu ermöglichen. Auch können kapazitive Touchdisplays bedient werden, wobei die Auslösung der Funktion über die Kamera 74 in der Handinnenfläche 18 erfasst wird. Die Funktion der Bedienelemente und des Touchdisplays sind somit überprüfbar.

Es besteht jedoch auch die Möglichkeit, z.B. Infrarot-Näherungssensoren, die in einem Fahrzeug integriert sind, auf ihre Funktionen hin zu überprüfen, über die z.B. eine Klimaanlage, ein Fensterdach oder Fensterscheiben gesteuert werden. Hierzu sind Infrarotstrahler 96, 98, 100, 102 in der Handinnenfläche 18 vorgesehen. Die Prüfhand 16 kann entsprechend die die Steuervorgänge auslösenden Infrarot-Näherungssensoren in dem Fahrzeug aktivieren und die Abstände, bei denen ein Auslösen erfolgt, mithilfe der integrierten Abstandssensoren 60, 62, 64, 66, 68, 70, 72, 74, 76, 78, 90, 92, 93, 110, 112, 114 erfassen. Es lassen sich komplexe Bedienabläufe mittels der Hand 16 nachstellen und realistisch prüfen.

Auch ein Einsatz in einer Prüfkammer ist möglich, um Umgebungseinflüsse zu untersuchen. Hierzu sind in der Prüfhand 16 Temperatur- und Feuchtesensoren 108 integriert.

Es besteht jedoch auch die Möglichkeit, virtuelle Bedienelemente, die z.B. durch ein Hologramm dargestellt sind, zu überprüfen. Hierzu kann die Kamera 64 eingesetzt werden, um ein entsprechendes Hologramm zu erfassen und deren Position zu bestimmen. Alternativ kann die Position des Hologramms auch in der Steuerung abgelegt sein. Die Hand 16 wird sodann zu dem Hologramm bewegt. Sodann führt die Hand 16 eine oder mehrere Gesten aus, so dass entsprechend einer von einem Fahrer durchzuführenden Bedienung eine Interaktion mit dem Hologramm derart erfolgt, dass vorgesehene Funktionen ausgelöst werden und somit die Funktion des Auslösens an sich überprüft werden kann.

Hierzu kann vorgesehen sein, dass mittels in der Hand 16 integrierter Sensoren Lage- und absolute Position des Hologramms in dem Fahrzeug ermittelt wird. Sodann wird die Hand 16 zum Hologramm mittels der Robotersteuerung bewegt, um sodann im Bereich der virtuellen Bedienelemente Gesten auszuführen, die von in dem Fahrzeug vorhandene optische Sensoren, wie Kameras, erfasst werden. Bei ordnungsgemäß ausgeführten Gesten und ausgelösten Funktionen werden zum Beispiel Ultraschallwellen von entsprechenden Sendern im Fahrzeug ausgesendet, die wiederum von in der Hand integrierte Sensoren, wie Ultraschallsensoren, erfasst werden. Eine haptische Rückmeldung ist messbar. Somit kann überprüft werden, ob die Funktionen eines Hologramms ordnungsgemäß ausgelöst werden.

Erwähntermaßen können die Positionsdaten des Hologramms auch abgespeichert sein, um die Hand 16 zum Hologramm bzw. in dessen Bereich zu bewegen.

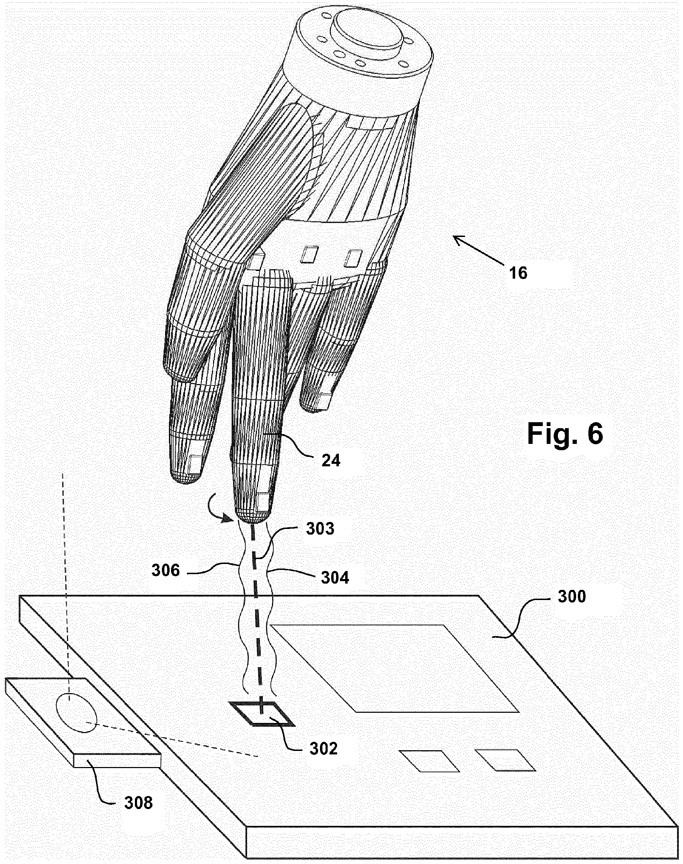

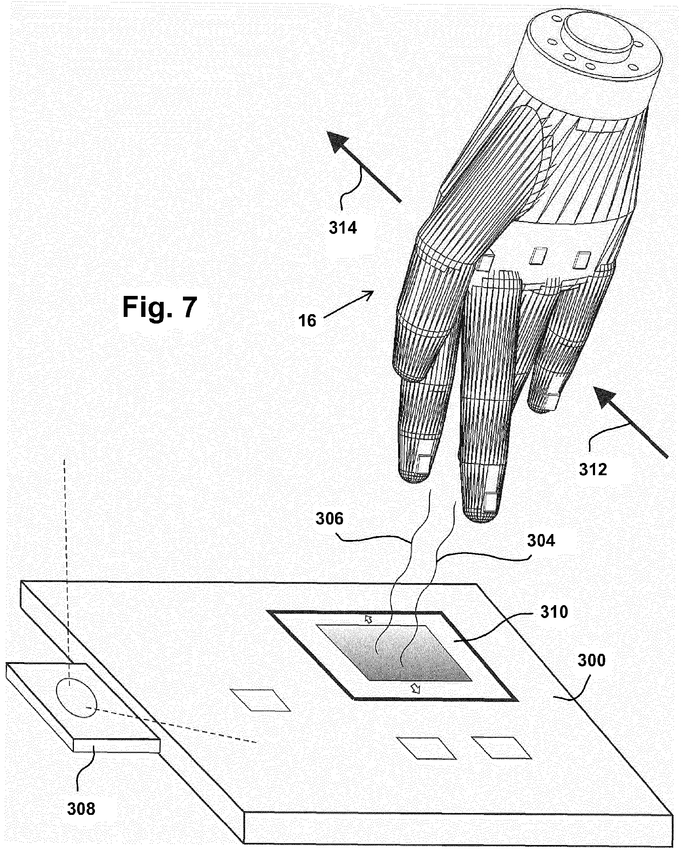

In den Fig. 6 und 7 ist rein prinzipiell ein Hologramm 300 in Form eines Displays dargestellt, dem sich die Hand 16 genähert hat, um eine Funktion auszulösen.

In Fig. 6 erfolgt mittels der Hand 16 ein "Tippen in der Luft" (Richtung gestrichelter Linie 303) vor einem Bedienelement bzw. einer Funktionstaste 302 des Hologramms 300. Im Ausführungsbeispiel erfolgt dies mittels des Mittelfingers 24. Die virtuelle Funktionstaste 302 auf der virtuellen Schaltfläche des als Display dargestellten Hologramms 300 wird durch die Bewegung des Fingers 24 betätigt, so dass z. B. die Funktionstaste 302 in einer anderen Farbe erscheinen kann. Dies kann von einem optischen Sensor in der Hand 16 erfasst werden. Insbesondere ist jedoch vorgesehen, dass die durch das Betätigen der Funktionstaste 302 ausgelöste Funktion dazu führt, dass Ultraschallwellen in Richtung der Hand 16 ausgesendet werden (Linien 304, 306), um eine haptische Rückkopplung in zumindest einem Ultraschallempfänger, der in der Hand 16 integriert ist, zu erzeugen. Die Bewegung der Hand 16 selbst wird mittels einer Kamera 308 erfasst, die im Ausführungsbeispiel unmittelbar im Bereich des Hologramms 300 in einem Fahrzeug angeordnet ist. Andere Positionen sind selbstverständlich gleichfalls möglich.

In Fig. 7 soll durch eine andere Geste der Hand 16 eine Funktion ausgelöst werden. So weist das Hologramm 300 ein Display 310 auf, so dass bei einer Wischbewegung (Pfeile 312, 314) der Hand 16 auf dem Display 310 ein anderes Bild aus einer vorgegebenen Liste erscheint. Es können z. B. auch Musikstücke aus einer Liste mittels Wischbewegung ausgewählt werden. Bei erfolgreicher Auslösung der Funktion werden gleichfalls Ultraschallwellen 304, 306 in Richtung der Hand 16 emittiert, um diese von z. B. einem Ultraschallsensor, der in der Hand 16 integriert ist, zu erfassen. Die Bewegung der Hand 16 wird durch zumindest eine in dem Fahrzeug angeordnete Kamera 308 erfasst, die in der zeichnerischen Darstellung neben dem Hologramm 300 angeordnet ist.

Durch die integrierten Abstandssensoren 60, 62, 64, 66, 68, 70, 72, 74, 76, 78, 90, 92, 93, 110, 112, 114 kann die Bewegung der Hand 16 geregelt werden, so dass aufgrund der Möglichkeit der optischen Erfassung von Einrichtungen in dem Fahrzeug eine selbsttätig bzw. selbsterlernende Überprüfung erfolgen kann.

## Patentansprüche

1. Verfahren zum Überprüfen einer Funktion eines eine Steuereinrichtung (200) aufweisenden Fahrzeuges und/oder zumindest einer Bedieneinrichtung eines Fahrzeuges mittels einer Hand (16) eines Handhabungsgerätes, die bewegliche Finger (20, 22, 24, 26, 28), Handfläche (18) und Handrücken (104) aufweist und in der mehrere Sensoren (60, 62, 64, 66, 68, 70, 72, 74, 76, 78, 80, 82, 84, 86, 88, 90, 92, 93, 94, 106, 108, 110, 112, 114) zumindest aus der Gruppe Abstandssensor, Drucksensor, Temperatursensor, Feuchtesensor, Inertialsensor, Ultraschallsensor, optischer Sensor integriert sind, wobei die Funktion berührungslos durch Annähern der Hand an die reale oder virtuell ausgebildete Steuereinrichtung und/oder Bedieneinrichtung überprüft wird.

2. Verfahren nach Anspruch 1 zur Überprüfung der Funktion der Steuereinrichtung,
**dadurch gekennzeichnet,**
**dass** zur Überprüfung der Funktion der Rückholung des Fahrzeuges von einem automatischen Fahren zu einem von einer Person beeinflussten Fahren zunächst die Steuereinrichtung (200), wie Lenkrad, mittels der Hand (16) gescannt und sodann eine die Steuereinrichtung umgebende Umhüllende (218) gebildet wird, dass der Abstand zwischen der Hand und der Steuereinrichtung durch eine in der Hand integrierten ersten Gruppe von Sensoren, insbesondere Abstandssensoren (60, 62, 64, 66, 68, 70, 72, 74, 76, 78, 90, 92, 93, 110, 112, 114), ermittelt wird, und dass dann, wenn die Hand die Umhüllende durchdringt, in der Steuereinrichtung integrierte Sensoren (212, 214, 216) dann die Rückholung auslösende Signale generieren, wenn die in der Steuereinrichtung integrierten Sensoren ordnungsgemäß arbeiten.

3. Verfahren nach Anspruch 1 oder 2,
**dadurch gekennzeichnet,**
**dass** Position der Hand (16) mittels des Inertialsensors (106) gemessen wird und die gemessenen Positionen in Koordinaten des Fahrzeugs transformiert werden.

4. Verfahren nach zumindest einem der vorhergehenden Ansprüche,
**dadurch gekennzeichnet,**
**dass** zur Bestimmung der Koordinaten der Steuereinrichtung (200) in Form eines Lenkrads zunächst die in dem Lenkrad integrierten Sensoren in Form von kapazitiven Sensoren (212, 214, 216) mit der Hand (16) berührt werden und sodann so ermittelte Messpunkte und mittels der Hand eingescannte Lenkraddaten in Messrobotik-Trajektorien der Hand transformiert werden.

5. Verfahren nach zumindest einem der vorhergehenden Ansprüche,
**dadurch gekennzeichnet,**
**dass** die Umhüllende (218) visualisiert wird.

6. Verfahren nach zumindest einem der vorhergehenden Ansprüche,
**dadurch gekennzeichnet,**
**dass** die Bewegung der Hand (16) und/oder deren Finger (20, 22, 24, 26, 28) über von einem oder mehreren Abstandssensoren (60, 62, 64, 66, 68, 70, 72, 74, 76, 78, 90, 92, 93, 110, 112, 114) gemessenen Abstand zu einer in dem Fahrzeug zu prüfenden und/oder eine Funktion auslösenden Einrichtung und/oder durch Signale einer mit dem optischen Sensor (94) verbundenen Bildverarbeitung beeinflusst bzw. geregelt wird.

7. Verfahren nach zumindest einem der vorhergehenden Ansprüche,
**dadurch gekennzeichnet,**
**dass** mittels dem in der Handfläche (18) integrierten optischen Sensor (94), wie Kamera, in dem Fahrzeug vorhandene Einrichtung und/oder Darstellung, wie Hologramm (300), erfasst wird, dass die Hand zu der Einrichtung und/oder der Darstellung bewegt wird und dass sodann mittels der Hand Messungen an der Einrichtung und/oder Darstellung durchgeführt oder Funktionen über die Einrichtung und/oder die Darstellung ausgelöst werden.

8. Verfahren nach zumindest einem der vorhergehenden Ansprüche,
**dadurch gekennzeichnet,**
**dass** von der Hand (16), vorzugsweise über einen Infrarotstrahler (96, 98, 100, 102), Wärme abgestrahlt wird, und dass mittels eines in der Hand integrierten Sensors Abstand zu einem in dem Fahrzeug integrierten Sensor in Abhängigkeit von durch die Wärme in dem in dem Fahrzeug integrierten Sensor ausgelöster Funktion ermittelt wird.

9. Verfahren nach zumindest einem der vorhergehenden Ansprüche,
**dadurch gekennzeichnet,**
**dass** durch von der Hand (16) ausgelöste Aktion einer Einrichtung, wie Touchscreen, und/oder einer Darstellung, wie Hologramm (300), von zumindest einem in der Hand integrierten Sensor (212, 214, 216), wie Drucksensor, Vibrationssensor, Ultraschallsensor oder optischer Sensor, ermittelt wird.

10. Verfahren nach zumindest einem der vorhergehenden Ansprüche,
**dadurch gekennzeichnet,**
**dass** mittels eines oder mehrerer in der Hand (16) integrierter Sensoren, insbesondere Drucksensor bzw. -sensoren (80, 82, 84, 86, 88) und/oder Vibrationssensor bzw. - sensoren, Funktion eines oder mehrerer Bedienelemente, wie Taste, Drehsteller von z.B. einer Infotainmenteinrichtung, gemessen wird bzw. werden.

11. Verfahren nach zumindest einem der vorhergehenden Ansprüche,
**dadurch gekennzeichnet,**
**dass** über eine berührungslose Wischbewegung der Hand (16) Funktion einer Einrichtung in dem Fahrzeug, wie Klimaanlage, Fenster- und/oder Schiebedach gesteuert bzw. geregelt wird.

12. Verfahren nach zumindest einem der vorhergehenden Ansprüche,
**dadurch gekennzeichnet,**
**dass** über in der Hand (16) integrierten Temperatur- und/oder Feuchtesensor (108) Funktion zumindest einer Einrichtung des Fahrzeuges in Abhängigkeit von Umgebungseinflüssen gemessen wird.

13. Verfahren nach zumindest einem der vorhergehenden Ansprüche,
**dadurch gekennzeichnet,**
**dass** ein in einem Fahrzeug dargestelltes insbesondere zumindest eine Steuerfunktion ermöglichendes Hologramm (300) mittels zumindest eines in der Hand (16) integrierten Sensors (60, 62, 64, 66, 68, 70, 72, 74, 76, 78, 90, 92, 93, 94, 110, 112, 114) erfasst und dessen Position im Fahrzeug gemessen wird oder die Position des Hologramms in der Steuerung für die Hand abgelegt ist, dass entsprechend der ermittelten oder bekannten Positionswerte sich die Hand (16) dem Hologramm nähert und im Bereich des Hologramms, in dem für eine ordnungsgemäße Funktionsauslösung Gesten (303, 312, 314) durchzuführen sind, Gesten ausführt, dass die Gesten mittels zumindest eines im Fahrzeug eingebauten optischen Sensors (308) erfasst und bei Erkennung der Gesten und einem ordnungsgemäßen Auslösen der Funktion durch die Gesten im Fahrzeug ausgelöste Aktion wie Ultraschallwellen von zumindest einem in der Hand (16) integrierten Sensor, wie Ultraschallsensor, erfasst wird bzw. werden.

14. Verwendung einer Hand (16) eines Handhabungsgerätes mit einem dreigliedrigen kleinen Finger (20), einem dreigliedrigen Ringfinger (22), einem dreigliedrigen Mittelfinger (24), einem dreigliedrigen Zeigefinger (26), einem zweigliedrigen Daumen (28) mit proximalem dritten Glied (58), Handfläche (18) und Handrücken (104), wobei
- zumindest jeweils ein Abstandssensor (60, 62, 64, 66, 68, 70, 72, 74, 76, 78, 90, 92, 93, 110, 112, 114) in jedem Finger sowie zumindest ein Abstandssensor in dem Daumen integriert sind, und
- die Abstandssensoren bestimmt sind, Abstand zu einer Steuereinrichtung (200) oder einer Bedieneinrichtung eines Fahrzeuges zum Überprüfen deren Funktion zu bestimmen.

15. Verwendung nach Anspruch 14,
**dadurch gekennzeichnet,**
**dass** in dem Finger (20, 22, 24, 26, 28) sowohl innenseitig als auch außenseitig zumindest jeweils ein Abstandssensor (60, 62, 64, 66, 68, 70, 72, 74, 76, 78), insbesondere im distalen Glied (30, 36, 42, 48, 54), integriert ist, wobei vorzugsweise zumindest ein Abstandssensor (110, 112, 114) im Handrücken (104) und/oder in der Handfläche (18) zumindest ein Infrarotstrahler (96, 98, 100, 102) und/oder der Inertialsensor (106) im Handrücken (104) und/oder in der Hand (16), insbesondere im Handrücken (104), ein Temperatur- und/oder Feuchtesensor (108) integriert ist.

## Claims

1. Method for checking a function of a vehicle having a control device (200) and/or at least one operating device of a vehicle by means of a hand (16) of a handling device that has movable fingers (20, 22, 24, 26, 28), a palm (18) and a back of the hand (104) and into which hand are integrated several sensors (60, 62, 64, 66, 68, 70, 72, 74, 76, 78, 80, 82, 84, 86, 88, 90, 92, 93, 94, 106, 108, 110, 112, 114) at least from the group of distance sensor, pressure sensor, temperature sensor, humidity sensor, inertial sensor, ultrasound sensor, optical sensor, with the function being checked contactlessly by moving the hand close to the actual or virtually provided control device and/or operating device.

2. Method according to claim 1 for checking the function of the control device,
**wherein**
for checking the function of retrieving the vehicle from automatic driving to driving influenced by a person, the control device (200) such as the steering wheel is first scanned by means of the hand (16) and then an envelope (218) surrounding the control device is formed; the distance between the hand and the control device is determined by a first group of sensors integrated into the hand, in particular distance sensors (60, 62, 64, 66, 68, 70, 72, 74, 76, 78, 90, 92, 93, 110, 112, 114); and when the hand penetrates the envelope, sensors (212, 214, 216) integrated into the control device generate the signals triggering the retrieval when the sensors integrated into the control device are operating properly.

3. Method according to claim 1 or 2,
**wherein**
the position of the hand (16) is measured by means of the inertial sensor (106) and the measured positions are transformed into coordinates of the vehicle.

4. Method according to at least one of the preceding claims,
**wherein**
for determining the coordinates of the control device (200) in the form of a steering wheel, firstly the sensors in the form of capacitive sensors (212, 214, 216) integrated into the steering wheel are touched with the hand (16) and then measurement points thus determined and steering wheel data scanned by means of the hand are transformed into measurement robotic trajectories for the hand.

5. Method according to at least one of the preceding claims,
**wherein**
the envelope (218) is visualized.

6. Method according to at least one of the preceding claims,
**wherein**
the movement of the hand (16) and/or its fingers (20, 22, 24, 26, 28) is influenced or controlled over a distance measured by one or more distance sensors (60, 62, 64, 66, 68, 70, 72, 74, 76, 78, 90, 92, 93, 110, 112, 114) to a device that is to be checked inside the vehicle and/or that triggers a function, and/or by signals of an image processing means connected to the optical sensor (94).

7. Method according to at least one of the preceding claims,
**wherein**
by means of the optical sensor (94) such as a camera integrated into the palm (18) the device and/or a display such as a hologram (300) present in the vehicle is captured; the hand is moved relative to the device and/or display; and measurements of the device and/or display are then performed by means of the hand or functions are triggered by the device and/or display.

8. Method according to at least one of the preceding claims,
**wherein**
heat is radiated from the hand (16), preferably by an infrared radiator (96, 98, 100, 102), and the distance to a sensor integrated into the vehicle is determined by means of a sensor integrated into the hand, depending on the function triggered by the heat in the sensor integrated into the vehicle.

9. Method according to at least one of the preceding claims,
**wherein**
an action of a device such as a touchscreen and/or of a display such as a hologram (300) triggered by the hand (16) is determined by at least one sensor (212, 214, 216) integrated into the hand such as a pressure sensor, vibration sensor, ultrasound sensor or optical sensor.

10. Method according to at least one of the preceding claims,
**wherein**
the function of one or more operating elements such as a button or rotary adjuster of, for example, an infotainment device is measured by means of one or more sensors integrated into the hand (16), in particular pressure sensor(s) (80, 82, 84, 86, 88) and/or vibration sensor(s).

11. Method according to at least one of the preceding claims,
**wherein**
the function of a device in the vehicle such as an air conditioner, window and/or sliding roof is controlled by a contactless swiping motion of the hand (16).

12. Method according to at least one of the preceding claims,
**wherein**
the function of at least one device of the vehicle is measured depending on ambient influences using a temperature and/or humidity sensor (108) integrated into the hand (16).

13. Method according to at least one of the preceding claims,
**wherein**
a hologram (300) displayed in a vehicle, in particular enabling at least one control function, is captured by means of at least one sensor (60, 62, 64, 66, 68, 70, 72, 74, 76, 78, 90, 92, 93, 94, 110, 112, 114) integrated into the hand (16) and its position in the vehicle is measured or the position of the hologram is saved in the control means for the hand; the hand (16) moves close to the hologram according to the determined or known position values and performs gestures in that area of the hologram in which gestures (303, 312, 314) have to be performed for proper triggering of a function; and the gestures are captured by means of at least one optical sensor (308) installed in the vehicle and upon recognition of those gestures and proper triggering of the function by those gestures an action triggered in the vehicle, such as ultrasound waves, is captured by at least one sensor integrated into the hand (16).

14. Use of a hand (16) of a handling device with a three-phalanx little finger (20), a three-phalanx ring finger (22), a three-phalanx middle finger (24), a three-phalanx index finger (26), a two-phalanx thumb (28) with proximal third phalanx (58), a palm (18) and a back of the hand (104),
- at least one distance sensor (60, 62, 64, 66, 68, 70, 72, 74, 76, 78, 90, 92, 93, 110, 112, 114) being integrated into each finger and at least one distance sensor into the thumb, and
- the distance sensors being intended to determine the distance to a control device (200) or to an operating device of a vehicle for checking its function.

15. Use according to claim 14,
**wherein**
at least one distance sensor (60, 62, 64, 66, 68, 70, 72, 74, 76, 78), is integrated into each finger (20, 22, 24, 26, 28) both inside and outside, in particular in the distal phalanx (30, 36, 42, 48, 54), with preferably at least one distance sensor (110, 112, 114) being integrated into the back of the hand (104) and/or at least one infrared radiator (96, 98, 100, 102) into the palm (18) and/or the inertial sensor (106) into the back of the hand (104) and/or a temperature and/or humidity sensor (108) into the hand (16), in particular the back of the hand (104).

## Revendications

1. Procédé de vérification d'une fonction d'un véhicule présentant un dispositif de commande (200) et/ou d'au moins un dispositif de conduite d'un véhicule au moyen d'une main (16) appartenant à un appareil de manipulation, qui présente des doigts mobiles (20, 22, 24, 26, 28), une paume (18) et un dos de main (104) et dans laquelle sont intégrés plusieurs capteurs (60, 62, 64, 66, 68, 70, 72, 74, 76, 78, 80, 82, 84, 86, 88, 90, 92, 93, 94, 106, 108, 110, 112, 114) appartenant au moins au groupe des capteur de proximité, capteur de pression, capteur de température, capteur d'humidité, capteur inertiel, capteur à ultrasons, capteur optique, sachant que la fonction est vérifiée sans contact en approchant la main du dispositif de commande et/ou dispositif de conduite réel ou virtuel.

2. Procédé selon la revendication 1 destiné à vérifier la fonction du dispositif de commande,
**caractérisé en ce**
**que** pour vérifier la fonction du retour du véhicule d'une conduite automatique à une conduite influencée par une personne, tout d'abord le dispositif de commande (200), tel un volant, est scanné au moyen de la main (16) et qu'ensuite est formée une enveloppe (218) entourant le dispositif de commande, que l'écart entre la main et le dispositif de commande est déterminé par un premier groupe de capteurs, intégré à la main, notamment par des capteurs de proximité (60, 62, 64, 66, 68, 70, 72, 74, 76, 78, 90, 92, 93, 110, 112, 114), et que, lorsque la main traverse l'enveloppe, des capteurs intégrés au dispositif de commande (212, 214, 216) génèrent ensuite des signaux déclenchant le retour si les capteurs intégrés au dispositif de commande fonctionnent correctement.

3. Procédé selon la revendication 1 ou 2,
**caractérisé en ce**
**que** la position de la main (16) est mesurée au moyen du capteur inertiel (106) et que les positions mesurées sont transformées en coordonnées du véhicule.

4. Procédé selon au moins une des revendications précédentes,
**caractérisé en ce**
**que** pour déterminer les coordonnées du dispositif de commande (200) sous forme de volant, tout d'abord les capteurs intégrés au volant sous forme de capteurs capacitifs (212, 214,216) sont touchés par la main (16) et qu'ensuite les points de mesure ainsi déterminés et les données du volant scannées avec la main sont transformés en trajectoires de main robot de mesure.

5. Procédé selon au moins une des revendications précédentes,
**caractérisé en ce**
**que** l'enveloppe (218) est visualisée.

6. Procédé selon au moins une des revendications précédentes,
**caractérisé en ce**
**que** le mouvement de la main (16) et/ou de ses doigts (20, 22, 24, 26, 28) est influencé ou régulé par le biais de l'écart mesuré par un ou plusieurs capteurs de proximité (60, 62, 64, 66, 68, 70, 72, 74, 76, 78, 90, 92, 93, 110, 112, 114) par rapport à un dispositif à vérifier dans le véhicule et/ou déclenchant une fonction et/ou par des signaux d'un traitement d'image relié au capteur optique (94).

7. Procédé selon au moins une des revendications précédentes,
**caractérisé en ce**
**qu'**au moyen du capteur optique (94) intégré à la paume (18), tel une caméra, est acquis le dispositif présent dans le véhicule ou une représentation telle qu'un hologramme (300), que la main est déplacée vers le dispositif et/ou la représentation et qu'ensuite au moyen de la main, des mesures sont réalisées sur le dispositif et/ou la représentation ou que des fonctions sont déclenchées sur le dispositif et/ou la représentation.

8. Procédé selon au moins une des revendications précédentes,
**caractérisé en ce**
**que** de la chaleur est émise de la main (16), de préférence via un radiateur infrarouge (96, 98, 100, 102), et qu'au moyen d'un capteur intégré à la main est déterminé l'écart par rapport à un capteur intégré au véhicule selon la fonction déclenchée par la chaleur, dans le capteur intégré au véhicule.

9. Procédé selon au moins une des revendications précédentes,
**caractérisé en ce**
**que** l'action d'un dispositif, tel qu'un écran tactile et/ou d'une représentation telle qu'un hologramme (300), déclenchée par la main (16) est déterminée par au moins un capteur (212, 214, 216) intégré à la main, tel qu'un capteur de pression, capteur de vibrations, capteur à ultrasons ou capteur optique.

10. Procédé selon au moins une des revendications précédentes,
**caractérisé en ce**
**qu'**au moyen d'un ou de plusieurs capteurs intégrés à la main (16), notamment un capteur ou des capteurs de pression (80, 82, 84, 86, 88) et/ou un capteur ou des capteurs de vibrations, est mesurée la fonction d'un ou de plusieurs éléments de commande, tels que touche, actionneur rotatif d'un dispositif d'info-divertissement par ex.

11. Procédé selon au moins une des revendications précédentes,
**caractérisé en ce**
**que** la fonction d'un dispositif dans le véhicule, tel que climatisation, toit vitré et/ou toit coulissant, est commandée ou régulée par un geste de balayage sans contact exécuté par la main (16).

12. Procédé selon au moins une des revendications précédentes,
**caractérisé en ce**
**que** la fonction d'au moins un dispositif d'un véhicule est mesurée par le capteur de température et/ou d'humidité (108) intégré dans la main (16), en fonction des conditions ambiantes.

13. Procédé selon au moins une des revendications précédentes,
**caractérisé en ce**
**qu'**un hologramme (300) représenté dans un véhicule, permettent notamment une fonction de commande est acquis au moyen d'au moins un capteur (60, 62, 64, 66, 68, 70, 72, 74, 76, 78, 90, 92, 93, 94, 110, 112, 114) intégré à la main (16) et que sa position est mesurée dans le véhicule ou que la position de l'hologramme est archivée dans la commande pour la main, qu'en fonction des valeurs de position déterminées ou connues, la main (16) s'approche de l'hologramme et que des gestes sont exécutés dans la zone de l'hologramme dans laquelle des gestes (303, 312,314) doivent être exécutés pour un déclenchement correct d'une fonction, que les gestes sont acquis au moyen d'au moins un capteur optique (308) monté dans le véhicule et que si les gestes sont identifiés et la fonction déclenchée correctement, l'action déclenchée par les gestes dans le véhicule, comme des ondes ultrasons, est acquise par au moins un capteur intégré à la main (16), tel qu'un capteur à ultrasons.

14. Utilisation d'une main (16) d'un appareil de manipulation avec un auriculaire comprenant trois éléments (20), un annulaire à trois éléments (22), un majeur à trois éléments (24), un index à trois éléments (26), un pouce à deux éléments (28) avec troisième élément proximal (58), une paume (18) et un dos de main (104), sachant
- que sont intégrés au moins un capteur de proximité (60, 62, 64, 66, 68, 70, 72, 74, 76, 78, 90, 92, 93, 110, 112, 114) dans chaque doigt ainsi qu'au moins un capteur de proximité dans le pouce, et
- que les capteurs de proximité sont destinés à déterminer l'écart par rapport à un dispositif de commande (200) ou de conduite d'un véhicule pour vérifier sa fonction.

15. Utilisation selon la revendication 14,
**caractérisée en ce**
**qu'**est intégré dans le doigt (20, 22, 24, 26, 28) aussi bien côté intérieur qu'extérieur, respectivement au moins un capteur de proximité (60, 62, 64, 66, 68, 70, 72, 74, 76, 78), notamment dans l'élément distal (30, 36, 42, 48, 54), sachant que de préférence, au moins un capteur de proximité (110, 112, 114) est intégré dans le dos de la main (104) et/ou dans la paume (18), au moins un radiateur infrarouge (96, 98, 100, 102) et/ou le capteur inertiel (106) sont intégrés dans le dos de la main (104) et/ouqu'un capteur de température et/ou d'humidité (108) est intégré dans la main (16), notamment dans le dos de la main (104).
